(19) Europäisches Patentamt
European Patent Office
Office européen des brevets

(11) **EP 2 343 931 B1**

(12) **FASCICULE DE BREVET EUROPEEN**

(45) Date de publication et mention
de la délivrance du brevet:
**05.12.2012 Bulletin 2012/49**

(51) Int Cl.:
***H04W 52/26*** *(2009.01)*

(21) Numéro de dépôt: **10192736.6**

(22) Date de dépôt: **26.11.2010**

(54) **Méthode de contrôle de puissance dans un réseau cellulaire à ressources de transmission surnuméraires**

Verfahren zur Leistungsregelung in einem Mobilfunknetz mit überzähligen Uebertragungsresourcen

Method of power control in a cellular network having redundant transmission capacity

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2009 FR 0958485**

(43) Date de publication de la demande:
**13.07.2011 Bulletin 2011/28**

(73) Titulaire: **Commissariat à l'Énergie Atomique et aux Énergies Alternatives**
**75015 Paris (FR)**

(72) Inventeur: **Calvanese, Strinati, Emilio**
**38000, GRENOBLE (FR)**

(74) Mandataire: **Augarde, Eric**
**BREVALEX**
**56 Boulevard de l'Embouchure,**
**Bât. B**
**B.P. 27519**
**31075 Toulouse Cedex 2 (FR)**

(56) Documents cités:
**EP-A1- 2 117 155    WO-A1-2005/081439**
**WO-A2-2005/043829    WO-A2-2006/004968**
**FR-A1- 2 877 176**

**Description**

**DOMAINE TECHNIQUE**

La présente invention concerne de manière générale le domaine des réseaux de télécommunication cellulaires et plus particulièrement un procédé de contrôle de puissance d'émission d'un terminal dans un tel réseau.

**ÉTAT DE LA TECHNIQUE ANTÉRIEURE**

Un des principaux problèmes affectant les réseaux cellulaires est celui de l'interférence entre cellules voisines (*inter cell interference*) et/ou de l'interférence au sein d'une même cellule (*intra cell interference*). Ainsi, une communication descendante ou montante entre une station de base et un terminal d'une cellule peut perturber des communications dans une cellule adjacente voire, lorsque la cellule est partitionnée en secteurs, dans un secteur adjacent. Cette situation est encore aggravée par la superposition de systèmes de communication cellulaires différents, notamment d'opérateurs différents et de types différents, tels que 3GPP, Wi-Max, réseaux locaux sans fil, femtocellules. On entend ici par femtocellule une petite station de base à usage résidentiel, prévue pour supporter quelques connexions Internet à haut débit, indépendamment de la technologie utilisée : CDMA, GSM ou UMTS. On trouvera notamment une description des femtocellules sous l'URL http://www.femtoforum.org.

Nous qualifierons par la suite d'*inter-système* l'interférence générée par les communications d'un système de télécommunication cellulaire sur un autre système de télécommunication cellulaire.

De nombreuses techniques ont été développées pour combattre l'interférence inter- ou intra- cellulaire. Il est par exemple bien connu d'allouer à cette fin des ressources de transmission orthogonales à différents utilisateurs d'une cellule ou de cellules voisines. Ces ressources de transmission peuvent être des fréquences, des intervalles temporels de transmission ou TTI (*Time Transmission Interval*), des intervalles de sous-porteuses (*chunks*) dans un multiplex OFDM (*Orthognal Frequency Division Multiplexing*), des codes orthogonaux, des faisceaux séparés spatialement (grâce à des antennes directionnelles), ou une combinaison quelconque des ces ressources. Ainsi, les communications relatives à différents usagers peuvent être séparées dans le temps et/ou dans l'espace et/ou dans un espace de code.

L'allocation des ressources de transmission peut être statique ou dynamique. Dans le cas d'une allocation statique, les ressources sont allouées pour toute la durée de la communication alors que dans le cas d'une allocation dynamique, l'allocation est effectuée selon l'état instantané des communications dans la cellule.

Quel que soit le type d'allocation, le nombre de ressources orthogonales est souvent bien insuffisant pour garantir un faible niveau d'interférence entre utilisateurs.

Il est également possible de réduire le niveau d'interférence entre utilisateurs au moyen d'un contrôle adaptatif de puissance. Cette technique est notamment utilisée pour les systèmes CDMA dans lesquels le phénomène dit de « *near-far effect* » dégrade de manière significative les performances des utilisateurs de faible puissance. De manière générale, le contrôle de puissance consiste à attribuer des puissances d'émission différentes aux différents utilisateurs de manière à minimiser le niveau d'interférence mutuelle tout en garantissant à chacun une qualité de service, libellée par exemple en termes de rapport signal sur bruit plus interférence ou SNIR (*Signal to Noise and Interference Ratio*). Lorsque le contrôle de puissance ne permet pas d'assurer les niveaux de qualité de service requis sur les différentes communications, des mesures additionnelles peuvent être prises, comme par exemple le contrôle d'admission de nouveaux utilisateurs. On trouvera une description de différentes méthodes de réduction d'interférence, en particulier par contrôle de puissance, dans l'article de N. Riato et al. intitulé « Interference mitigation strategies for WiMAX networks », ICWCS 2007.

La plupart des méthodes de contrôle de puissance partent du principe que les ressources en transmission sont limitées, et généralement en nombre insuffisant par rapport au nombre de communications, c'est-à-dire au nombre d'utilisateurs actifs dans le réseau. La méthode de réduction d'interférence par contrôle de puissance classique n'est par conséquent pas adaptée à une femtocellule dont on sait que les ressources de transmission (intervalles de temps de transmission et intervalles de sous-porteuses d'un multiplex OFDM) sont pléthoriques par rapport au nombre de communications à établir.

Le problème à la base de l'invention est par conséquent de proposer une méthode de contrôle de puissance dans un réseau cellulaire, qui soit simple et robuste et qui puisse conduire à une réduction significative du niveau d'interférence lorsque le nombre de ressources de transmission est plus élevé que le nombre de communications.

**EXPOSÉ DE L'INVENTION**

La présente invention est définie par une méthode de contrôle de puissance d'émission d'un terminal dans un réseau de télécommunication cellulaire, au moins une ressource de transmission et un schéma de modulation et de codage étant initialement alloués au dit terminal pour une transmission avec une qualité de service requise sur une liaison, dans laquelle :

- on détermine le nombre de ressources de transmission supplémentaires que nécessiterait ladite transmission au moyen d'un schéma de modulation et de codage prédéterminé, de plus faible efficacité spectrale que le schéma de modulation et de codage initialement alloué ;
- on vérifie si le nombre de ressources de transmission disponibles dans la zone où se trouve le terminal est supérieur au nombre de ressources de transmission supplémentaires ainsi déterminé, et, dans l'affirmative,
- on alloue au dit terminal les ressources de transmission supplémentaires et l'on fixe sa puissance d'émission à la puissance d'émission minimale permettant d'obtenir la qualité de service requise en utilisant ledit schéma de modulation et de codage prédéterminé.

Selon une première variante, le schéma de modulation et de codage prédéterminé est identique pour tous les terminaux appartenant à une même zone.

Selon une seconde variante, le schéma de modulation et de codage prédéterminé dépend d'une caractéristique de la communication du terminal.

Selon une troisième variante, le schéma de modulation et de codage prédéterminé est fixé lors de l'admission du terminal dans une zone dudit réseau.

Avantageusement, le schéma de modulation et de codage prédéterminé peut dépendre de la quantité de ressources de transmission disponibles dans ladite zone au moment où le contrôle de puissance est effectué.

L'allocation des ressources aux différents terminaux situés dans la zone peut être effectuée périodiquement, et dans ce cas, le contrôle de puissance de ces terminaux est répété à chaque période d'allocation.

Selon un premier mode de réalisation, le nombre de ressources de transmission disponibles dans la zone où se trouve le terminal est inférieur au nombre de ressources de transmission supplémentaires, le schéma de modulation et de codage prédéterminé, dit premier schéma, est remplacé par un second schéma de modulation et de codage, dit second schéma, d'efficacité spectrale supérieure à celui du premier schéma.

Selon un second mode de réalisation, le schéma de modulation et de codage prédéterminé est décidé entre zones voisines du réseau, en particulier entre stations de base servant des cellules voisines ou des secteurs de cellule adjacents.

Selon un troisième mode de réalisation, le schéma de modulation et de codage prédéterminé est fixé par un réseau de télécommunication distinct dudit réseau de télécommunication cellulaire.

Les ressources de transmission sont par exemple des intervalles de sous-porteuses d'un multiplex OFDM.

Dans ce cas, la puissance d'émission du terminal peut être fixée par :

$$P'_e(dB) = P_e(dB) + SNR'_{Th}(dB) - SNR_{Th}(dB)$$

où $P_e$ est la puissance initialement attribuée au terminal, $SNR'_{th}$ et $SNR_{th}$ sont les rapports signal à bruit nécessaires pour obtenir ladite qualité de service requise, en utilisant respectivement le schéma de modulation et de codage prédéterminé et le schéma de modulation et de codage initialement attribué au dit terminal.

Alternativement, dans ce cas encore, la puissance d'émission du terminal est fixée par :

$$P'_e = \frac{N_0}{|h|^2} SNR'_{Th}$$

où $h$ est le coefficient d'atténuation sur ladite liaison et $N_0$ est une estimation de la puissance de bruit sur cette liaison.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente de manière schématique une méthode de contrôle de puissance dans un réseau cellulaire selon un mode de réalisation de l'invention ;
La Fig. 2 représente un exemple d'utilisation d'une méthode de contrôle de puissance selon l'invention dans le cadre d'un réseau cellulaire OFDMA.

**EXPOSÉ DÉTAILLÉ DE MODES DE RÉALISATION PARTICULIERS**

Nous considérerons dans la suite un réseau cellulaire et plus particulièrement une cellule d'un tel réseau, voire un secteur d'une telle cellule. Le terme général de zone sera utilisé pour se référer aussi bien à une cellule qu'à un secteur d'une cellule.

Nous supposerons dans la suite que le réseau dispose de ressources de transmission, orthogonales ou quasi-orthogonales, pour séparer les communications des utilisateurs. Par ressources de transmission nous entendons ici des fréquences distinctes, des intervalles de temps de transmission distincts, des intervalles distincts de sous-porteuses d'un multiplex OFDM, des codes orthogonaux, ou une combinaison quelconque des ressources précitées. On fait également l'hypothèse que le nombre de ressources de transmission est en moyenne plus élevé que le nombre d'utilisateurs à servir dans la zone.

La liaison montante ou descendante d'un utilisateur est caractérisée par le schéma de modulation et de codage qu'elle utilise. Par schéma de modulation et de codage ou MCS (*Modulation and Coding Scheme*), on entend un couple constitué par un code canal et un alphabet de modulation. Plus précisément, la liaison d'un utilisateur peut utiliser des codes correcteurs d'erreurs ou FEC (*Forward Error Correction*) présentant différents débits de codage (*coding rates*) et des alphabets de modulation présentant différents degrés de modulation. Ainsi, de manière générale, plus le débit du code et le degré de modulation sont faibles, plus l'efficacité spectrale de la liaison sera faible mais plus sa robustesse au bruit sera élevée. A l'inverse, plus le débit du code et le degré de modulation sont élevés, plus l'efficacité spectrale de la liaison sera élevée mais plus sa robustesse au bruit sera faible. On rappelle que l'efficacité spectrale d'une liaison est exprimée en bits/s/Hz.

A titre illustratif, nous avons donné dans le tableau I ci-après des exemples de schémas de modulation et de codage pour une liaison OFDM descendante assurant un trafic voix dans un système LTE (*Long Term Evolution*) dans un contexte « indoor ».

Tableau I

| référence du MCS | Alphabet de modulation | Débit du code | efficacité spectrale | $SNR_{th}$(dB) |
|---|---|---|---|---|
| MCS1 | QPSK | 1/3 | 2/3 | -1,31 |
| MCS2 | QPSK | 1/2 | 1 | 1,07 |
| MCS3 | QPSK | 2/3 | 4/3 | 3,20 |
| MCS4 | 16-QAM | 1/3 | 4/3 | 3,48 |
| MCS5 | QPSK | 3/4 | 3/2 | 4,33 |
| MCS6 | 16-QAM | 1/2 | 2 | 6,37 |
| MCS7 | 64-QAM | 1/3 | 2 | 7,30 |
| MCS8 | 16-QAM | 2/3 | 8/3 | 9,05 |
| MCS9 | 16-QAM | 3/4 | 3 | 10,38 |
| MCS10 | 64-QAM | 3 | 3 | 11,03 |
| MCS11 | 64-QAM | 4 | 4 | 14,02 |
| MCS12 | 64-QAM | 9/2 | 9/2 | 15,60 |

On notera qu'à chaque schéma de modulation et de codage MCS correspond une efficacité spectrale $\eta$. En outre, pour une qualité de service (QoS) de consigne donnée, exprimée par exemple comme taux d'erreur bit ou taux d'erreur paquet à ne pas dépasser, l'utilisation d'un schéma MCS impose que le niveau signal sur bruit sur la liaison soit supérieur à un niveau minimal, $SNR_{th}$. Les valeurs $SNR_{th}$ sont spécifiques à un type d'implémentation, elles dépendent en général de l'environnement du réseau, du code utilisé, etc. Elles sont déterminées de manière expérimentale ou heuristique.

L'homme du métier comprendra que pour obtenir une qualité de service donnée, seuls certains schémas de modulation et de codage $MCS_n$, $n \leq n_0$ puissent être utilisés. Ainsi, dans le tableau précédent, si le rapport signal sur bruit de la liaison est de 7 dB, seuls les schémas $MCS_n$, $n = 1,..,6$ pourront convenir. En outre, le nombre de ressources de transmission à utiliser dépend du schéma MCS retenu. Par exemple, le schéma $MCS_6$ présente une efficacité spectrale double de celle du schéma $MCS_2$ et peut donc utiliser deux fois moins de ressources de transmission (en l'occurrence des intervalles de sous-porteuses du multiplex OFDM).

On désigne par contrôle d'adaptation de liaison (*link adaptation control*) l'opération qui affecte à la liaison d'un utilisateur, un schéma de modulation et de codage permettant d'obtenir une qualité de service de consigne sur cette liaison. Traditionnellement, le contrôle d'adaptation de liaison sélectionne le schéma MCS offrant la plus grande efficacité spectrale possible et permettant donc l'utilisation du plus faible nombre de ressources de transmission.

L'idée à la base de l'invention prend le contrepied de cette stratégie habituelle et propose de réduire l'efficacité spectrale sur une liaison en lui allouant corrélativement un nombre de ressources de transmission plus important. Ceci permet, à qualité de service constante, d'abaisser la puissance de transmission sur chaque ressource de transmission et par suite le niveau d'interférence généré, que ce soit sur les communications du même secteur, de la même cellule, de secteurs voisins ou de cellules adjacentes, ou encore sur les communications d'un autre système cellulaire. En particulier, lorsque plusieurs réseaux cellulaires se superposent, avec macrocellules, cellules, femtocellules, la réduction du niveau d'émission dans l'un d'entre eux permet d'abaisser le niveau d'interférence inter-système.

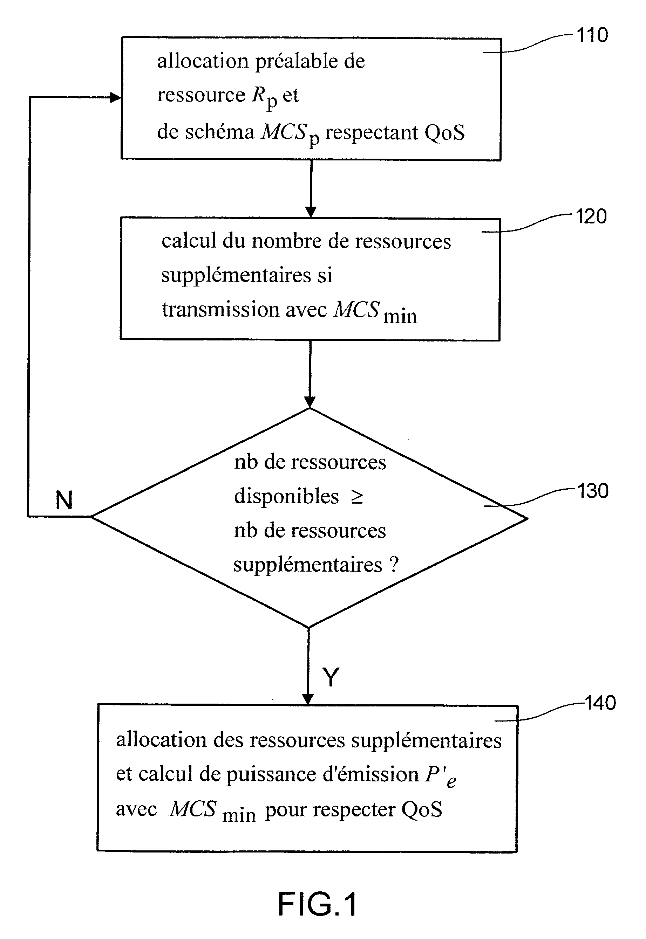

La Fig. 1 représente schématiquement l'organigramme d'une méthode de contrôle de puissance selon un mode de réalisation de l'invention.

On suppose qu'une allocation de ressources de transmission et un contrôle d'adaptation de liaison ont été préalablement effectués pour chaque utilisateur.

Chaque utilisateur se voit ainsi allouer au moins une ressource de transmission et un schéma de modulation et de codage, noté $MCS_p$, pour transmettre sur cette ressource, avec une qualité de service requise, $QoS$. Le résultat de cette allocation est représenté en 110.

On considère ci-après une communication sur une liaison montante d'un utilisateur ou une liaison descendante pour un utilisateur donné.

Dans un première étape 120, on détermine le nombre de ressources de transmission supplémentaires que nécessiterait la transmission au moyen d'un schéma de modulation et de codage prédéterminé, $MCS_{min}$, présentant une efficacité spectrale minimale prédéterminée. Si les schémas de modulation et de codage sont rangés par efficacité spectrale croissante, $MCS_1,...,MCS_p,...,MCS_N$, le schéma prédéterminé appartient en général à $MCS_1,...,MCS_p$. Si, exceptionnellement le schéma initialement alloué $MCS_{n0}$, est de même efficacité spectrale voire d'efficacité spectrale inférieure à celle de $MCS_{min}$, aucune réallocation a lieu et l'on passe à l'utilisateur suivant.

Dans une seconde étape 130, on détermine si le nombre de ressources de transmission disponibles dans la zone (cellule, secteur) où se trouve le terminal est supérieur au nombre de ressources de transmission supplémentaires ainsi déterminé. Dans la négative, selon une première variante, on retourne en 110 en maintenant l'allocation de ressources et le schéma MCS initial, et l'on passe à l'utilisateur suivant. Selon une seconde variante non représentée, on opte pour un nouveau schéma $MCS_{min}$ de plus grande efficacité spectrale que le schéma initial (par exemple, le schéma suivant dans une liste de schémas MCS ordonnés par efficacité spectrale croissante comme dans le Tableau I) et l'on retourne à l'étape 120. Avantageusement, dans ce cas, le schéma $MCS_{min}$ est réinitialisé au schéma initial à chaque fois que l'on passe à un nouvel utilisateur.

A l'étape, 140, si les ressources supplémentaires sont effectivement disponibles dans la zone considérée, on alloue au dit terminal les ressources de transmission supplémentaires et l'on fixe sa puissance d'émission à la plus faible puissance d'émission permettant d'obtenir la qualité de service de consigne $QoS$, en utilisant le schéma de modulation et de codage prédéterminé, $MCS_{min}$.

Le schéma de modulation et de codage prédéterminé $MCS_{min}$ peut être identique pour les différents utilisateurs situés dans une zone (cellule, secteur). Selon, un exemple de réalisation, ce schéma peut être préalablement négocié entre secteurs adjacents et/ou cellules avoisinantes, notamment en fonction de leurs charges respectives.

Alternativement, le schéma prédéterminé $MCS_{min}$ peut différer d'un utilisateur à l'autre en fonction des caractéristiques de l'utilisateur, par exemple en fonction de la qualité de service demandée, la taille maximale de paquet requise par la communication, la catégorie d'abonnement de l'utilisateur, le caractère temps réel ou non réel de la communication etc.

Alternativement encore, le schéma $MCS_{min}$ peut dépendre de l'utilisateur au sens où il est déterminé lors de la procédure d'admission, en fonction notamment de la quantité de ressources de transmission disponibles dans la zone considérée. Par exemple, lorsqu'un terminal entre dans une cellule, il pourra se voir attribuer un schéma $MCS_{min}$ d'efficacité spectrale plus ou moins élevée selon la charge instantanée de la cellule, c'est-à-dire selon qu'elle dispose respectivement de peu ou de beaucoup de ressources de transmission libres à ce moment là.

Le contrôle de puissance représenté en Fig. 1 peut être effectué à intervalles réguliers, par exemple à chaque période d'allocation de ressources, ou bien, en mode interruption, à chaque fois que des ressources de transmission se libèrent dans la zone en question. Dans les deux cas, les ressources de transmission libérées entretemps peuvent être allouées à un utilisateur à l'étape 140.

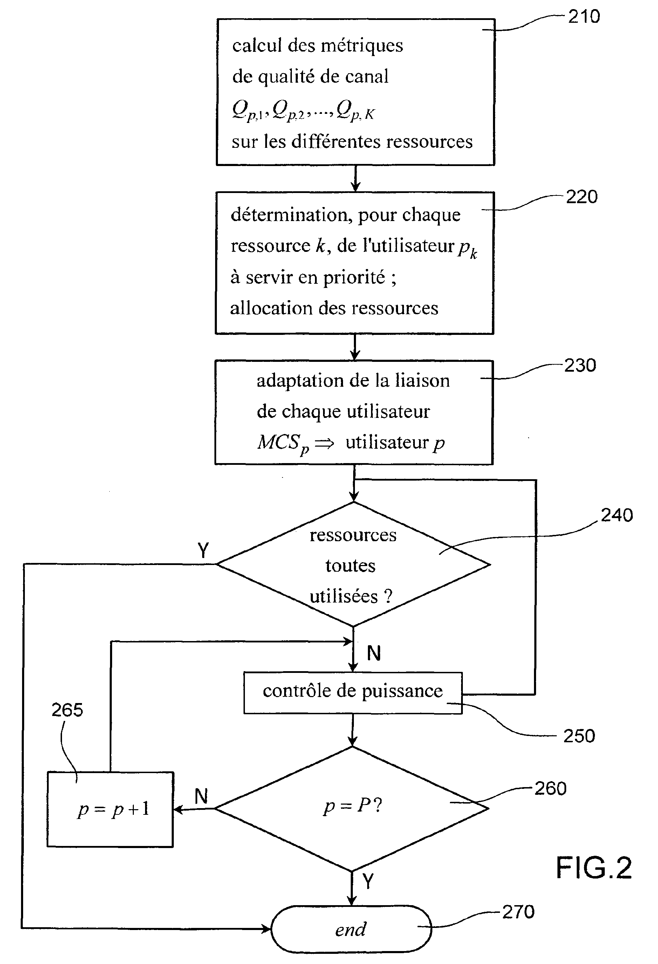

La Fig. 2 illustre de manière schématique la méthode de contrôle de puissance, selon un mode de réalisation de l'invention, dans le cas particulier d'un système OFDMA (*Orthogonal Frequency Division Multiple Access*). Les ressources de transmission sont des intervalles de sous-porteuses d'un multiplex OFDM et l'allocation de ressources est effectuée à intervalles réguliers. Soit $T_a$ la période d'allocation de ces ressources.

On considère une zone du réseau (cellule, secteur de cellule), comprenant $P$ utilisateurs actifs, notés $UE_1,...,$ $UE_P$. Les ressources de transmission sont notées $chunk_1,...,chunk_K$, elles définissent une partition fréquentielle du multiplex OFDM. A chaque période $T_a$ un utilisateur peut se voir attribuer une ou plusieurs ressources parmi les $K$ ressources possibles.

A l'étape 210, on calcule, pour chaque utilisateur $p$, la valeur d'une métrique de qualité de canal sur chacune des ressources de transmission $chunk_1,...,chunk_K$. On obtient ainsi des valeurs de métrique $Q_{p,1},...,Q_{p,K}$, chaque valeur $Q_{p,k}$ donnant une indication de la qualité du canal de l'utilisateur $p$ sur la ressource $chunk_k$. Cette métrique peut être par exemple un rapport signal sur bruit, un signal sur bruit plus interférence, un coefficient d'atténuation.

A l'étape 220, on sélectionne pour chacune des ressources, $chunk_k$, l'utilisateur $UE_{pk}$ qui sera servi en priorité grâce à une fonction d'utilité ou une règle d'ordonnancement.

Dans le premier cas, il s'agira de maximiser une fonction d'utilité (ou de manière équivalente de minimiser une fonction de coût), par exemple de maximiser la métrique de qualité de canal sur la ressource, soit :

$$p_k = Arg\max_p\left(Q_{p,k}\right) \qquad\qquad (1)$$

Dans le second cas, il s'agira de permettre l'accès à la ressource en fonction d'un critère d'urgence ou d'équité. Par exemple, on peut utiliser comme règle d'ordonnancement un algorithme de type EDF (*Earliest Deadline First*), PF (*Proportional Fair*), ou *round-robin.*

Le cas échéant, on pourra appliquer à la fois une fonction d'utilité et une règle d'ordonnancement pour sélectionner l'utilisateur prioritaire par ressource. Ce mode de sélection permet de départager des utilisateurs des utilisateurs qui ne pourraient l'être sur la base de la seule maximisation de ladite fonction d'utilité ou l'application du seul critère d'ordonnancement.

Au terme de l'étape 220, chaque utilisateur $p$ se voit allouer les ressources :

$$chunk_k|p_k = p \qquad\qquad (2)$$

autrement dit, la liaison de l'utilisateur $p$ utilisera les ressources qui lui ont été ainsi allouées.

A l'étape 230, on effectue une adaptation de la liaison de chaque utilisateur $U_p$ en fonction de la qualité de service requise $QoS_p$ pour la communication. On rappelle que la qualité de service peut être libellée en taux d'erreur bit (BER) ou taux d'erreur paquet (PER). L'adaptation de la liaison consiste à choisir un schéma de modulation et décodage parmi un ensemble de schémas possibles $MCS_1,...,MCS_N$ qui permet d'obtenir la meilleure efficacité spectrale sur la liaison tout en respectant la consigne $QoS_p$

Au terme de l'étape 230, chaque utilisateur $p$ se voit ainsi attribuer un schéma de modulation et de codage $MCS_p$.

On vérifie en 240 si toutes les ressources de transmission de la zone sont utilisées. Dans l'affirmative, on termine le processus en 270. Dans la négative, on entre dans une boucle d'itération sur $p$ symbolisée par 250 dans laquelle on effectue un contrôle de puissance pour chacun des utilisateurs, comme expliqué en relation avec Fig. 1.

On vérifie au terme de chaque itération si l'on a atteint le nombre total de ressources de transmission de la zone et dans l'affirmative on termine le processus en 270. En effet, la méthode de contrôle de puissance selon l'invention suppose que des ressources de transmission soient libres. Elle ne peut qu'en mobiliser et non en libérer.

On teste en 260, si l'on a traité tous les utilisateurs, c'est-à-dire si $p=P.$ Dans l'affirmative, on termine le processus en 270. Dans la négative, on incrémente $p$ en 265 et l'on effectue un contrôle de puissance pour l'utilisateur suivant.

Pour un utilisateur $UF_p$ de qualité de service requise $QoS_p$, auquel a été attribués au moins une ressource de transmission $chunk_k$ et un schéma de modulation et de codage $MCS_p$, on détermine le nombre de ressources supplémentaires $chunk_{k'}$, $k'{\neq}k$, qu'il faudrait allouer à l'utilisateur pour pouvoir transmettre avec la schéma de modulation et de codage $MCS_{min}$. Par exemple, si l'on a attribué initialement à l'utilisateur $m$ intervalles de sous-porteuses (supposés de même largeur de bande), le nombre d'intervalles supplémentaires de sous-porteuses peut s'exprimer comme :

$$m'-m = \left(\frac{\eta}{\eta_{min}}-1\right)m \qquad\qquad (3)$$

où $\eta$ et $\eta_{min}$ sont respectivement l'efficacité spectrale du schéma $MCS_p$ et celle du schéma $MCS_{min}.$

Si ces *m'-m* ressources sont disponibles, elles sont allouées à l'utilisateur (qui dispose ainsi au total de *m'* ressources).

On note $SNR_{th}^{p}$ le rapport signal sur bruit nécessaire pour obtenir la qualité de service $QoS_p$ avec le schéma $MCS_p$. Ce rapport signal sur bruit est donné par une table stockée en mémoire, contenant par exemple les informations du tableau I pour la qualité de service $QoS_p$. On comprendra que pour chaque niveau de BER (ou de PER), un rapport signal sur bruit minimal $SNR_{th}$ est associé à chaque schéma de modulation et de codage.

On détermine ensuite, à l'aide de la même table, le rapport signal sur bruit $SNR'^{p}_{th}$ nécessaire pour obtenir la même qualité de service $QoS_p$ avec le schéma $MCS_{min}$.

La nouvelle puissance d'émission $P'_e$ du terminal de l'utilisateur peut alors être obtenue à partir de la puissance d'émission $P_e$ initialement attribuée à cet utilisateur, au moyen de :

$$P'_e(dB) = P_e(dB) + SNR'^{p}_{Th}(dB) - SNR_{Th}^{p}(dB) \qquad (4)$$

Alternativement, si l'on connaît le coefficient d'atténuation $h_p$ de la liaison et que l'on a estimé la puissance de bruit $N_0$ sur cette liaison, il n'est pas nécessaire de rechercher dans la table le niveau signal sur bruit $SNR_{th}^{p}$ et la puissance d'émission $P'_e$ peut être calculée directement :

$$P'_e = \frac{N_0}{\left|h_p\right|^2} SNR'_{Th} \qquad (5)$$

Bien qu'illustrée dans le cas particulier d'un système OFDMA, l'homme du métier comprendra que la méthode de contrôle de puissance selon l'invention ne dépend pas du type de ressources de transmission à allouer. La méthode de contrôle de puissance exposée en relation avec la Fig. 1 ne fait notamment pas d'hypothèses sur le type d'accès et peut s'appliquer en principe à tout type de réseau cellulaire.

## Revendications

1. Méthode de contrôle de puissance d'émission d'un terminal dans un réseau de télécommunication cellulaire, au moins une ressource de transmission et un schéma de modulation et de codage étant initialement alloués au dit terminal pour une transmission avec une qualité de service requise sur une liaison, **caractérisée en ce que** :

   - on détermine (120) le nombre de ressources de transmission supplémentaires que nécessiterait ladite transmission au moyen d'un schéma de modulation et de codage prédéterminé, de plus faible efficacité spectrale que le schéma de modulation et de codage initialement alloué;
   - on vérifie (130) si le nombre de ressources de transmission disponibles dans la zone où se trouve le terminal est supérieur au nombre de ressources de transmission supplémentaires ainsi déterminé, et, dans l'affirmative,
   - on alloue (140) au dit terminal les ressources de transmission supplémentaires et l'on fixe sa puissance d'émission à la puissance d'émission minimale permettant d'obtenir la qualité de service requise en utilisant ledit schéma de modulation et de codage prédéterminé.

2. Méthode de contrôle de puissance selon la revendication 1, **caractérisée en ce que** le schéma de modulation et de codage prédéterminé est identique pour tous les terminaux appartenant à une même zone.

3. Méthode de contrôle de puissance selon la revendication 1, **caractérisée en ce que** le schéma de modulation et de codage prédéterminé dépend d'une caractéristique de la communication du terminal.

4. Méthode de contrôle de puissance selon la revendication 1, **caractérisée en ce que** le schéma de modulation et de codage prédéterminé est fixé lors de l'admission du terminal dans une zone dudit réseau.

5. Méthode de contrôle de puissance selon l'une des revendications précédentes, **caractérisée en ce que** le schéma de modulation et de codage prédéterminé dépend de la quantité de ressources de transmission disponibles dans ladite zone au moment où le contrôle de puissance est effectué.

6. Méthode de contrôle de puissance selon l'une des revendications précédentes, **caractérisée en ce que**, l'allocation des ressources aux différents terminaux situés dans la zone étant effectuée périodiquement, le contrôle de puissance de ces terminaux est répété à chaque période d'allocation.

7. Méthode de contrôle de puissance selon la revendication 1, **caractérisée en ce que** si le nombre de ressources de transmission disponibles dans la zone où se trouve le terminal est inférieur au nombre de ressources de transmission supplémentaires, le schéma de modulation et de codage prédéterminé, dit premier schéma, est remplacé par un second schéma de modulation et de codage, dit second schéma, d'efficacité spectrale supérieure à celui du premier schéma.

8. Méthode de contrôle de puissance selon la revendication 1, **caractérisée en ce que** le schéma de modulation et de codage prédéterminé est décidé entre zones voisines du réseau, en particulier entre stations de base servant des cellules voisines ou des secteurs de cellule adjacents.

9. Méthode de contrôle de puissance selon la revendication 1, **caractérisée en ce que** le schéma de modulation et de codage prédéterminé est fixé par un réseau de télécommunication distinct dudit réseau de télécommunication cellulaire.

10. Méthode de contrôle de puissance selon l'une des revendications précédentes, **caractérisée en ce que** les ressources de transmission sont des intervalles de sous-porteuses d'un multiplex OFDM.

11. Méthode de contrôle de puissance selon la revendication 10, **caractérisée en ce que** la puissance d'émission du terminal est fixée par :

$$P'_e(dB) = P_e(dB) + SNR'_{Th}(dB) - SNR_{Th}(dB)$$

où $P_e$ est la puissance initialement attribuée au terminal, $SNR'_{th}$ et $SNR_{th}$ sont les rapports signal à bruit nécessaires pour obtenir ladite qualité de service requise, en utilisant respectivement le schéma de modulation et de codage prédéterminé et le schéma de modulation et de codage initialement attribué au dit terminal.

12. Méthode de contrôle de puissance selon la revendication 10, **caractérisée en ce que** la puissance d'émission du terminal est fixée par :

$$P'_e = \frac{N_0}{|h|^2} SNR'_{Th}$$

où $h$ est le coefficient d'atténuation sur ladite liaison et $N_0$ est une estimation de la puissance de bruit sur cette liaison.

**Claims**

1. Method for controlling the transmission power of a terminal in a cellular telecommunications network, in which at least one transmission resource and a modulation and coding scheme are initially allocated to said terminal for transmission with a quality of service required for a link, in which:

- the number of additional transmission resources that would be necessary for the transmission by means of a predetermined modulation and coding scheme, with a lower spectral efficiency than the modulation and coding scheme initially allocated, is determined (120);
- it is checked (130) whether the number of transmission resources available in the zone where the terminal is located is greater than the number of additional transmission resources thus determined, and, if so,
- the additional transmission resources are allocated (140) to said terminal, and the transmission power thereof is set to the minimum transmission power enabling the quality of service required to be obtained by using the predetermined modulation and coding scheme.

2. Power control method according to claim 1, **characterized in that** the predetermined modulation and coding scheme is identical for all of the terminals belonging to the same zone.

3. Power control method according to claim 1, **characterized in that** the predetermined modulation and coding scheme is dependent on a characteristic of the communication of the terminal.

4. Power control method according to claim 1, **characterized in that** the predetermined modulation and coding scheme is set when the terminal is admitted into a zone of said network.

5. Power control method according to one of the previous claims, **characterized in that** the predetermined modulation and coding scheme is dependent on the number of transmission resources available in said zone when the power control is performed.

6. Power control method according to one of the previous claims, **characterized in that** the allocation of the resources to the various terminals located in the zone can be performed periodically, and the power control of these terminals is repeated in each allocation period.

7. Power control method according to claim 1, **characterized in that** if the number of transmission resources available in the zone where the terminal is located is less than the number of additional transmission resources, and the predetermined modulation and coding scheme, called the first scheme, is replaced by a second modulation and coding scheme, called the second scheme, with a higher spectral efficiency than the first scheme.

8. Power control method according to claim 1, **characterized in that** the predetermined modulation and coding scheme is decided between neighboring zones of the network, in particular between base stations serving neighboring cells or adjacent cell sectors.

9. Power control method according to claim 1, **characterized in that** the predetermined modulation and coding scheme is set by a telecommunications network separate from said cellular telecommunications network.

10. Power control method according to claim 1, **characterized in that** the transmission resources are sub-carrier intervals of an OFDM multiplex.

11. Power control method according to claim 10, **characterized in that** the transmission power of the terminal can be set by:

$$P'_e(dB) = P_e(dB) + SNR'_{Th}(dB) - SNR_{Th}(dB)$$

in which $P_e$ is the power initially allocated to the terminal, $SNR'_{th}$ and $SNR_{th}$ are the signal-to-noise ratios necessary for obtaining said required quality of service, by respectively using the predetermined modulation and coding scheme and the modulation and coding scheme initially allocated to said terminal.

12. Power control method according to claim 10, **characterized in that** the transmission power of the terminal is set by:

$$P'_e = \frac{N_0}{|h|^2} SNR'_{Th}$$

in which *h* is the attenuation coefficient on said link and $N_0$ is an estimation of the noise power on this link.

**Patentansprüche**

1. Verfahren zur Steuerung der Sendeleistung eines Terminals in einem zellulären Telekommunikationsnetz, wobei wenigstens eine Übertragungsressource sowie ein Modulations- und Codierschema anfänglich dem Terminal zugewiesen werden für eine Übertragung mit einer auf einer Verbindung erforderlichen Dienstqualität, **dadurch gekennzeichnet, dass**:

   - man die Zahl der zusätzlichen Übertragungsressourcen, die die Übertragung benötigen würde, mit Hilfe eines vorbestimmten Modulations- und Codierschemas mit geringerer spektraler Effizienz als das anfänglich zugewiesene Modulations- und Codierschema bestimmt (120);
   - man überprüft (130), ob die Zahl der in der Zone, wo sich das Terminal befindet, verfügbaren Übertragungsressourcen größer ist als die derart bestimmte Zahl zusätzlicher Übertragungsressourcen, und bejahendenfalls
   - man dem Terminal die zusätzlichen Übertragungsressourcen zuweist (140) und man seine Sendeleistung bei der minimalen Sendeleistung fixiert, die die Erzielung der benötigten Dienstqualität erlaubt, wobei man das vorbestimmte Modulations- und Codierschema verwendet.

2. Verfahren zur Leistungssteuerung nach Anspruch 1, **dadurch gekennzeichnet, dass** das vorbestimmte Modulations- und Codierschema für alle Terminals identisch ist, die zu ein und derselben Zone gehören.

3. Verfahren zur Leistungssteuerung nach Anspruch 1, **dadurch gekennzeichnet, dass** das vorbestimmte Modulations- und Codierschema von einer Eigenschaft der Kommunikation des Terminals abhängt.

4. Verfahren zur Leistungssteuerung nach Anspruch 1, **dadurch gekennzeichnet, dass** das vorbestimmte Modulations- und Codierschema während der Zulassung des Terminals in eine Zone des Netzes fixiert ist.

5. Verfahren zur Leistungssteuerung nach einem der vorhergehenden Ansprüche, **dadurch gekennzeichnet, dass** das vorbestimmte Modulations- und Codierschema von der Quantität der Übertragungsressourcen abhängt, die in der Zone in dem Moment verfügbar sind, wo die Leistungssteuerung durchgeführt wird.

6. Verfahren zur Leistungssteuerung nach einem der vorhergehenden Ansprüche, **dadurch gekennzeichnet, dass** die Zuweisung der Ressourcen zu den verschiedenen Terminals, die sich in der Zone befinden, periodisch durchgeführt wird, wobei die Leistungssteuerung dieser Terminals bei jeder Zuweisungsperiode wiederholt wird.

7. Verfahren zur Leistungssteuerung nach Anspruch 1, **dadurch gekennzeichnet, dass** dann, wenn die Zahl von Übertragungsressourcen, die in der Zone verfügbar sind, wo sich das Terminal befindet, kleiner ist als die Zahl von zusätzlichen Übertragungsressourcen, das vorbestimmte Modulations- und Codierschema, genannt erstes Schema, durch ein zweites Modulations- und Codierschema, genannt zweites Schema, mit einer spektralen Effizienz ersetzt wird, die größer ist als jene des ersten Schemas.

8. Verfahren zur Leistungssteuerung nach Anspruch 1, **dadurch gekennzeichnet, dass** das vorbestimmte Modulations- und Codierschema zwischen benachbarten Zonen des Netzes bestimmt wird, insbesondere zwischen Basisstationen, die benachbarte Zellen oder angrenzende Zellensektoren bedienen.

9. Verfahren zur Leistungssteuerung nach Anspruch 1, **dadurch gekennzeichnet, dass** das vorbestimmte Modulations- und Codierschema durch ein Telekommunikationsnetz fixiert wird, das von dem zellulären Telekommunikationsnetz verschieden ist.

10. Verfahren zur Leistungssteuerung nach einem der vorhergehenden Ansprüche, **dadurch gekennzeichnet, dass** die Übertragungsressourcen Unterträgerintervalle eines OFDM-Multiplex sind.

11. Verfahren zur Leistungssteuerung nach Anspruch 10, **dadurch gekennzeichnet, dass** die Sendeleistung des Terminals fixiert wird durch:

$$P'_e \, (dB) = P_e \, (dB) + SNR'_{Th} \, (dB) - SNR_{Th} \, (dB)$$

wobei $P_e$ die dem Terminal anfänglich zugewiesene Leistung ist, $SNR'_{th}$ und $SNR_{th}$ die Signal-Rauschverhältnisse sind, die erforderlich sind, um die benötigte Dienstqualität zu erhalten, wobei das vorbestimmte Modulations- und Codierschema bzw. das dem Terminal anfänglich zugewiesene Modulations- und Codierschema verwendet werden.

12. Verfahren zur Leistungssteuerung nach Anspruch 10, **dadurch gekennzeichnet, dass** die Sendeleistung des Terminals fixiert wird durch:

$$P'_e = \frac{N_0}{|h|^2} SNR'_{Th}$$

wobei h der Dämpfungskoeffizient auf der Verbindung ist, und wobei $N_0$ eine Abschätzung der Rauschleistung auf dieser Verbindung ist.

FIG.1

calcul des métriques
de qualité de canal
$Q_{p,1}, Q_{p,2}, ..., Q_{p,K}$
sur les différentes ressources

— 210

détermination, pour chaque
ressource $k$, de l'utilisateur $p_k$
à servir en priorité ;
allocation des ressources

— 220

adaptation de la liaison
de chaque utilisateur
$MCS_p \Rightarrow$ utilisateur $p$

— 230

ressources
toutes
utilisées ?

— 240

Y

N

contrôle de puissance

— 250

265

$p = p + 1$

N

$p = P$ ?

— 260

Y

end

— 270

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **N. RIATO et al.** Interference mitigation strategies for WiMAX networks. *ICWCS,* 2007